# EUROPÄISCHE PATENTANMELDUNG

(11) **EP 2 905 636 A1**
(43) Veröffentlichungstag der Anmeldung: **12.08.2015**
(21) Anmeldenummer: 14154393.4
(22) Anmeldetag: 07.02.2014
(51) Int. Cl.: G01W 1/14

(54) **Hagelsensor**

(71) Anmelder: Deutscher Wetterdienst, 63067 Offenbach (DE)
(72) Erfinder: Lanzinger, Eckhard, 22393 Hamburg (DE)
(74) Vertreter: Eisenführ Speiser

(57) **Zusammenfassung**

Die Erfindung betriff einen Hagelsensor mit einer Prallfläche, auf die Niederschlag auftreffen kann, und wenigstens einem Wandler, welcher so angeordnet und ausgebildet ist, dass er im Falle einer Auslenkung der Prallfläche in Folge auf die Prallfläche auftreffenden Niederschlags ein entsprechendes Wandler-Ausgangssignal abgibt. Die Prallfläche ist von mit Abstand zueinander geführten Drähten oder Drahtabschnitten, Seilen oder Seilabschnitten oder dergleichen gebildet, die so angeordnet sind, dass zwischen den Drähten, Seilen oder dergleichen ein Abstand besteht, durch den flüssiger Niederschlag nach Auftreten auf die Prallfläche leicht hindurch treten kann.

## Beschreibung

Die Erfindung betriff einen Hagelsensor mit einer Prallfläche, auf die Niederschlag auftreffen kann, und wenigstens einem Wandler, welcher so angeordnet und ausgebildet ist, dass er im Falle einer Auslenkung der Prallfläche in Folge auf die Prallfläche auftreffenden Niederschlags in Form von Hagel ein entsprechendes Wandler-Ausgangssignal abgibt.

Niederschlagssensoren mit einer Prallfläche und einem Wandler zum Registrieren von beim Auftreffen von Niederschlagsteilchen auf die Prallfläche erzeugten Schwingungen sind grundsätzlich bekannt und beispielsweise in DE 103 30 128 A1, EP 0 422 553 A1, FR 2 595 473, WO 03/027720 A1 oder WO 2013/147605 A2 beschrieben. Bei derartigen Niederschlagssensoren lenkt ein auf die Prallfläche auftreffendes Niederschlagsteilchen die Prallfläche aus und versetzt sie typischerweise in Schwingung. Eine Auslenkung der Prallfläche kann mittels eines entsprechenden Wandlers erfasst werden, der ein dementsprechendes Wandler-Ausgangssignal liefert. Durch Auswertung des Wandler-Ausgangssignals lässt sich ermitteln, ob ein Niederschlagsteilchen auf die Prallfläche aufgetroffen ist. Dies kann beispielsweise anhand einer Analyse der Amplitude des Wandler-Ausgangssignals erfolgen.

Bei derartigen Niederschlagssensoren besteht regelmäßig der Wunsch, unterschiedliche Arten von Niederschlag, beispielsweise Regen, Schnee oder Hagel, voneinander zu unterscheiden. Insbesondere besteht der Wunsch, Niederschlag in Form von Hagel zu erkennen und sicher von allen anderen Niederschlagsarten, beispielsweise in Form von Regen, zu unterscheiden. Dies ist jedoch nicht einfach.

Der Erfindung liegt die Aufgabe zu Grunde, einen Hagelsensor zu schaffen, der möglichst zuverlässig und einfach Niederschlag in Form von Hagel erfassen kann.

Erfindungsgemäß wird diese Aufgabe durch einen Hagelsensor der eingangs genannten Art gelöst, bei dem die Prallfläche von mit Abstand zueinander geführten Drähten oder Drahtabschnitten, Seilen oder Seilabschnitten oder dergleichen gebildet ist, die so angeordnet sind, dass zwischen den Drähten, Seilen oder dergleichen ein Abstand besteht, durch den flüssiger Niederschlag nach Auftreten auf die Prallfläche leicht hindurch treten kann.

Eine derartige Prallfläche wird von flüssigem Niederschlag weit weniger ausgelenkt als von festem Niederschlag, weil auf die Prallfläche treffende Wassertropfen von den Drähten, Seilen oder dergleichen "zerschnitten" werden, sodass beim Auftreffen flüssigen Niederschlags auf eine erfindungsgemäße Prallfläche kaum eine Impulsübertragung erfolgt und daher die Prallfläche auch praktisch nicht ausgelenkt und zu Schwingungen angeregt wird. Hagelkörner hingegen treffen auf die erfindungsgemäße Prallfläche ähnlich auf wie auf herkömmliche, geschlossene Prallflächen und lenken die Prallfläche in Folge der Impulsübertragung entsprechend aus. Daraus resultiert ein Wandler-Ausgangssignal, dass sich von einem Wandler-Ausgangssignal beim Auftreffen von beispielsweise Regen oder Schnee auf die Prallfläche deutlich und vor allem leicht erkennbar unterscheidet. Auch alle anderen meteorologischen Einflussgrößen, insbesondere Wind, können nicht zu einer nennenswerten Auslenkung der Prallfläche führen. Damit erlaubt der erfindungsgemäße Hagelsensor eine eindeutige Erkennung von Hagel durch eine zuverlässige und einfache Unterscheidung von Niederschlag in Form von Hagel von anderem Niederschlag. Der erfindungsgemäße Hagelsensor eignet sich damit als zuverlässiger Hageldetektor und Hagelsensor.

Vorzugsweise beträgt der Abstand (und damit der lichte Raum) zwischen den die Prallfläche bildenden Drähten oder Drahtabschnitten, Seilen oder Seilabschnitten oder dergleichen zwischen 1 mm und 5 mm und ist damit etwas kleiner als der Durchmesser typischer Hagelkörner, welcher definitionsgemäß mindestens 5 mm beträgt. Solche Hagelkörner können damit nicht ohne Impulsübertragung durch die erfindungsgemäße Prallfläche hindurchtreten.

Die die Prallfläche bildenden Drähte oder Drahtabschnitte, Seile oder Seilabschnitte oder dergleichen haben vorzugsweise einen Durchmesser von höchstens 1 mm, sodass sie von auftreffendem flüssigem Niederschlag nur wenig oder gar nicht ausgelenkt werden. Die maximale Auslenkung der die Prallfläche bildenden Drähte oder Drahtabschnitte, Seile oder Seilabschnitte oder dergleichen wird zudem über deren mechanische Spannung eingestellt.

Für eine zuverlässige Erkennung von Niederschlag in Form von Hagel ist es auch vorteilhaft, wenn die die Prallfläche bildenden Drähte oder Drahtabschnitte, Seile oder Seilabschnitte oder dergleichen mit wenigstens annähernd gleichem Abstand voneinander und wenigstens annähernd parallel zueinander geführt sind. Damit besitzt die Prallfläche überall die gleiche "Empfindlichkeit" für den Niederschlag einer jeweiligen Art und Größe.

Die die Prallfläche bildenden Drähte oder Drahtabschnitte, Seile oder Seilabschnitte oder dergleichen können schlicht nach Art von Harfensaiten parallel zueinander geführt sein oder können sich kreuzen, beispielsweise siebartig miteinander verwoben sein. Im ersten Fall hängen die Drähte oder Drahtabschnitte im Bereich der Prallfläche nicht miteinander zusammen, während im zweiten Fall die Drähte im Bereich der Prallfläche miteinander zusammenhängen können, sofern sie verwoben und nicht schlicht kreuzweise zueinander geführt sind.

Um eine unerwünschte Akkumulation von Hagelkörnern auf der Prallfläche zu vermeiden kann diese leicht schräg angeordnet werden, damit die Hagelkörner darauf abrollen können. Die Akkumulation von Schnee auf der Prallfläche ist bei parallel gespannten, weniger als 1 mm dicken Drähten oder Drahtabschnitten, Seilen oder Seilabschnitten oder dergleichen kaum möglich. Bei verwobenen oder kreuzweise geführten Drähten ist eine Schneeakkumulation prinzipiell möglich, kann jedoch durch Beheizen der Drähte mittels einer angelegten Gleichspannung verhindert werden.

Der Wandler weist vorzugsweise eine Spule oder ein Piezoelement auf und ist angeordnet und ausgebildet, um eine Schwingung wenigstens eines des die Prallfläche bildenden Drahtes oder Drahtabschnitts, Seiles oder Seilabschnitts oder dergleichen zu erfassen und dann entsprechend das Wandler-Ausgangssignal auszugeben.

Insbesondere in dem Fall, in dem die Prallfläche von mehreren parallel zueinander geführten Drähten oder Drahtabschnitten gebildet wird, ist es vorteilhaft, wenn der Hagelsensor mehrere Wandler aufweist, die unterschiedlichen der die Prallfläche bildenden Drähte, Seile oder dergleichen zugeordnet sind.

Die Verwendung einer Spule als Wandler hat den Vorteil, dass akustische Signale aus der Umgebung nicht erfasst werden und damit eine Störung der Messung insbesondere durch Umweltgeräusche natürlichen oder künstlichen Ursprungs nicht erfolgen kann. Bei Verwendung eines Piezoelementes ist darauf zu achten, dass akustische Signale aus der Umwelt nicht in das Messsignal einkoppeln.

Die die Prallfläche bildenden Drähte oder Drahtabschnitte, Seile oder Seilabschnitte oder dergleichen sind vorzugsweise Metalldrähte, die aus einem einzelnen Filament gebildet sind (und damit als Draht bezeichnet werden) oder auch von mehreren Metallfilamenten gebildet sein können und daher als Seile bezeichnet werden. Jedoch können die Seile grundsätzlich auch aus einem oder mehreren Materialien bestehen.

Im Falle einer Prallfläche, die von mehreren, parallel zueinander geführten Drähten oder Drahtabschnitten, Seilen oder Seilabschnitten gebildet ist, können diese Draht- oder Seilabschnitte auch Abschnitte eines einzelnen hin- und hergeführten Drahtes oder Seils sein, so ähnlich wie dies beispielsweise bei den die Bespannung eines Tennisschlägers bildenden Seilen der Fall ist.

Vorzugsweise ist der wenigstens eine Wandler mit einer Speichereinheit oder einer Auswerteeinheit oder beidem verbunden, die dem Speichern oder Auswerten des Wandler-Ausgangssignals oder beidem dienen. Falls der Wandler lediglich mit einem Speicher zum Aufzeichnen des Wandler-Ausgangssignals verbunden ist, kann dieser Speicher später ausgelesen und der Zeitverlauf des Wandler-Ausgangssignals im Nachhinein analysiert werden. Ist der Wandler hingegen unmittelbar mit einer Auswerteeinheit verbunden, kann das jeweilige Wandler-Ausgangssignal auch in Echtzeit von der Auswerteeinheit analysiert werden.

Die Auswerteeinheit ist vorzugsweise dazu ausgebildet, Zeitabschnitte des Wandler-Ausgangssignals einem Aufprall eines Hagelkorns zuzuordnen. Das bedeutet, dass die Auswerteeinheit das Wandler-Ausgangssignal analysiert um solche Signalabschnitte zu identifizieren, die für das Auftreffen eines Hagelkorns charakteristisch sind. Vorzugsweise geschieht dies beispielsweise durch Auswertung der Amplitude des Wandler-Ausgangssignals. Wenn die Amplitude beispielsweise einen bestimmten Schwellwert überschreitet, ist dies ein Anzeichen dafür, dass eine Impulsübertragung auf die Prallfläche stattgefunden hat, wie sie für den Aufprall eines Hagelkorns typisch ist. Neben einem einfachen Amplitudenkriterium kann die Auswerteeinheit jedoch auch weitere Formen der Signalanalyse zusätzlich oder alternativ durchführen, um den Aufprall eines jeweiligen Hagelkorns zu detektieren.

Es ist besonders vorteilhaft, wenn die Auswerteeinheit so ausgebildet ist, dass sie nicht nur das Auftreffen beliebiger Hagelkörner identifizieren kann, sondern möglichst auch noch eine Zuordnung für das Auftreffen von Hagelkörnern charakteristischer Signalabschnitte zu verschiedenen Hagelkorngrößen durchzuführen. Wenn die Auswerteeinheit beispielsweise ein relativ einfaches Amplitudenkriterium realisiert, können beispielsweise statt eines einzelnen Schwellwerts für die Amplitude mehrere Schwellwerte vorgesehen sein, so dass die Signalabschnitte damit die Hagelkörner in verschiedene Kategorien eingeteilt werden können, die unterschiedlich großen Hagelkörnern entsprechen.

Die Erfindung soll nun anhand eines Ausführungsbeispiels in Bezug auf die Figuren näher erläutert werden. Von den Figuren zeigt
- Fig. 1:: eine seitliche Schnittansicht eines erfindungsgemäßen Hagelsensors;
- Fig. 2:: eine Draufsicht auf den erfindungsgemäßen Hagelsensor.

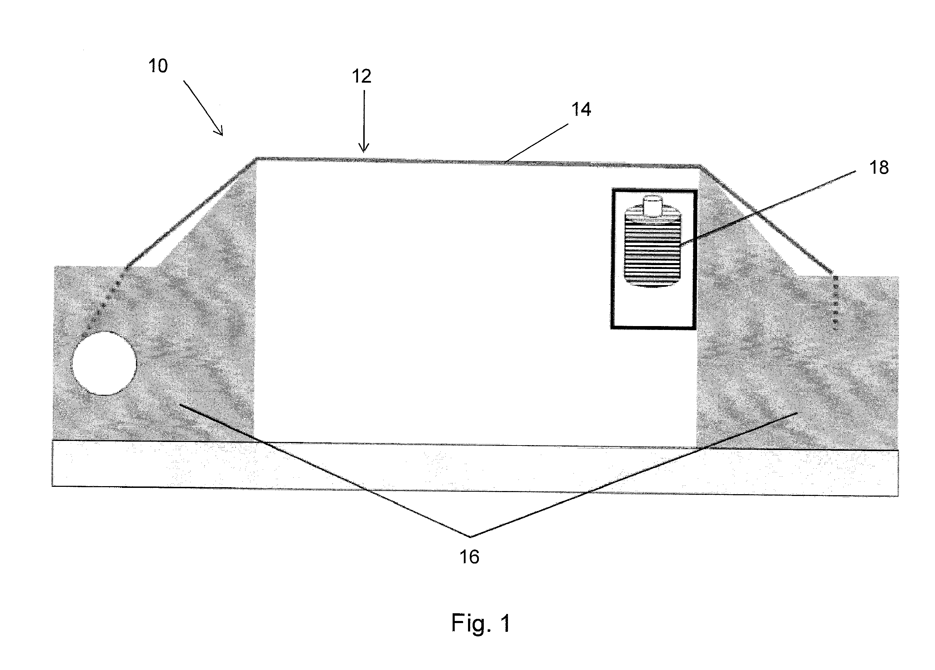

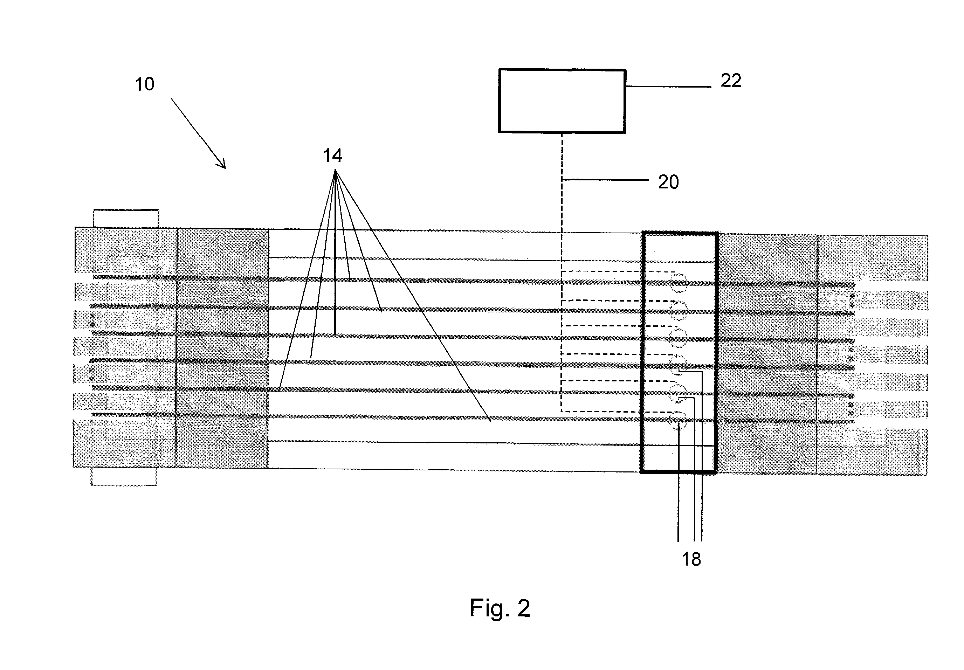

Fig. 1 und 2 zeigen einen Hagelsensor 10 mit einer Prallfläche 12, die von einzelnen Drahtabschnitten 14 eines Drahtes gebildet ist. Die einzelnen Drahtabschnitte14 sind ähnlich wie die Saiten einer Harfe oder einer Gitarre oder die Drahtanschnitte eines Eierschneiders parallel zueinander gespannt und haben voneinander alle einen gleichen und gleichbleibenden Abstand, der beispielsweise zwischen 1 mm und 5 mm, vorzugsweise etwa 5 mm beträgt. Die einzelnen Drahtabschnitte14 sind Drahtabschnitte eines einzelnen Drahtes, der über einen Rahmen 16 gespannt ist, wie dies insbesondere der Fig. 2 leicht zu entnehmen ist.

Jedem Drahtabschnitt 14 ist jeweils ein Wandler 18 zugeordnet, der eine Spule aufweist, mittels der Auslenkungen und Schwingungen der Drahtabschnitte 14 erfasst werden können. Die Wandler 18 liefern jeweils ein entsprechendes Wandler-Ausgangssignal, welches über entsprechende Signalleitungen 20 einer Auswerteeinheit 22 zugeführt wird.

Die Auswerteeinheit 22 ist ausgebildet das Wandler-Ausgangssignal zu analysieren um solche Signalabschnitte zu identifizieren, die für das Auftreffen eines Hagelkorns charakteristisch sind. Vorzugsweise wertet die Auswerteeinheit wenigstens die Amplitude des Wandler-Ausgangssignals aus. Wenn die Amplitude des Wandler-Ausgangssignals beispielsweise einen bestimmten Schwellwert überschreitet, ist dies ein Anzeichen dafür, dass eine Impulsübertragung auf die Prallfläche mit einer Größenordnung stattgefunden hat, wie sie für den Aufprall eines Hagelkorns typisch ist. Neben einem einfachen Amplitudenkriterium kann die Auswerteeinheit jedoch auch weitere Formen der Signalanalyse zusätzlich oder alternativ durchführen, um den Aufprall eines jeweiligen Hagelkorns zu detektieren und vom Auftreffen anderer Objekte zu differenzieren.

Im Ausführungsbeispiel ist die Auswerteeinheit so ausgebildet, dass sie nicht nur das Auftreffen beliebiger Hagelkörner identifizieren kann, sondern auch noch eine Zuordnung für das Auftreffen von Hagelkörnern charakteristischer Signalabschnitte zu verschiedenen Hagelkorngrößen durchführen kann. Hierzu wendet die Auswerteeinheit beispielsweise ein relativ einfaches Amplitudenkriterium an, gemäß dem statt eines einzelnen Schwellwerts für die Amplitude mehrere verschieden hohe Schwellwerte vorgesehen sind, die unterschiedlich großen Auslenkungen eines jeweiligen Drahtabschnitts 14 der Prallfläche 12 entsprechen, so dass die Signalabschnitte des Wandler-Ausgangssignals und dementsprechend die eine jeweilige Auslenkung des Wandler-Ausgangssignals verursachenden Hagelkörner in verschiedene Kategorien eingeteilt werden können, die unterschiedlich großen Hagelkörnern entsprechen.

Der die Drahtabschnitte 14 bildende Draht ist in dem Ausführungsbeispiel ein Metalldraht mit einem einzigen Element, also ein Draht im engeren Sinne. Alternativ könnte auch ein Seil mit mehreren Filamenten vorgesehen sein, die vorzugsweise aus Metall bestehen.

## Patentansprüche

1. Hagelsensor (10) mit einer Prallfläche (12), auf die Niederschlag auftreffen kann, und wenigstens einem Wandler (18), welcher so angeordnet und ausgebildet ist, dass er im Falle einer Auslenkung der Prallfläche (12) infolge auf die Prallfläche (12) auftreffenden Niederschlags ein entsprechendes Wandler-Ausgangssignal abgibt, **dadurch gekennzeichnet, dass** die Prallfläche (12) von mit Abstand zueinander geführten Drähten oder Drahtabschnitten (14), Seilen oder Seilabschnitten oder dergleichen gebildet ist, so dass zwischen den Drähten oder Drahtabschnitten (14), Seilen oder Seilabschnitten oder dergleichen ein Abstand besteht, durch den flüssiger Niederschlag nach Auftreffen auf die Prallfläche (12) leicht hindurchtreten kann.

2. Hagelsensor nach Anspruch 1, **dadurch gekennzeichnet, dass** der Abstand zwischen den die Prallfläche (12) bildenden Drähten oder Drahtabschnitten (14), Seilen oder Seilabschnitten oder dergleichen zwischen 1 mm und 5 mm beträgt.

3. Hagelsensor nach Anspruch 1 oder 2, **dadurch gekennzeichnet, dass** die die Prallfläche (12) bildenden Drähte oder Drahtabschnitte (14), Seile oder Seilabschnitte oder dergleichen einen Durchmesser von höchstens 1 mm haben.

4. Hagelsensor nach einem der Ansprüche 1 bis 3, **dadurch gekennzeichnet, dass** die die Prallfläche (12) bildenden Drähte oder Drahtabschnitte (14), Seile oder Seilabschnitte oder dergleichen mit wenigstens annähernd gleichem Abstand voneinander und wenigstens annähernd parallel zueinander geführt sind.

5. Hagelsensor nach einem der Ansprüche 1 bis 3, **dadurch gekennzeichnet, dass** die die Prallfläche (12) bildenden Drähte oder Drahtabschnitte (14), Seile oder Seilabschnitte oder dergleichen siebartig miteinander verwoben sind.

6. Hagelsensor nach einem der Ansprüche 1 bis 5, **dadurch gekennzeichnet, dass** der Wandler (18) eine Spule oder ein Piezoelement aufweist, der angeordnet und ausgebildet, um eine Auslenkung und/oder Schwingung wenigstens eines der die Prallfläche (12) bildenden Drähte oder Drahtabschnitte (14), Seile oder Seilabschnitte oder dergleichen zu erfassen und ein entsprechendes elektrisches Signal auszugeben.

7. Hagelsensor nach einem der Ansprüche 1 bis 6, **dadurch gekennzeichnet, dass** der Hagelsensor mehrere Wandler (18) aufweist, die unterschiedlichen die Prallfläche (12) bildenden Drähten oder Drahtabschnitten (14), Seilen oder Seilabschnitten oder dergleichen zugeordnet sind.

8. Hagelsensor nach einem der Ansprüche 1 bis 7, **dadurch gekennzeichnet, dass** der wenigstens eine Wandler (18) mit einer Speichereinheit und/oder einer Auswerteeinheit (22) zum Speichern und/oder Auswerten des Wandler-Ausgangssignals verbunden ist.

9. Hagelsensor nach Anspruch 8, **dadurch gekennzeichnet, dass** die Auswerteeinheit (22) ausgebildet ist, eine Amplitude des Wandler-Ausgangssignals derart auszuwerten, dass die Auswerteeinheit (22) Zeitabschnitten des Wandler-Ausgangssignals einem Aufprall eines Hagelkorns zuordnet.

10. Hagelsensor nach Anspruch 9, **dadurch gekennzeichnet, dass** die Auswerteeinheit (22) ausgebildet ist, eine Amplitude des Wandler-Ausgangssignals derart auszuwerten, dass die Auswerteeinheit (22) einen jeweiligen einem Aufprall eines Hagelkorns zugeordneten Zeitabschnitten des Wandler-Ausgangssignals einer von mehreren verschiedenen Hagelkorngrößen zuordnet.
